# EUROPEAN PATENT APPLICATION

(11) **EP 4 518 496 A1**
(43) Date of publication of application: **05.03.2025**
(21) Application number: 23810786.6
(22) Date of filing: 05.05.2023
(51) Int. Cl.: H04W 72/04

(54) **COMMUNICATION METHOD AND APPARATUS**

(30) Priority: 23.05.2022 CN 202210562900
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Thun, Clemens
(86) International application number: PCT/CN2023/092271
(87) International publication number: WO 2023/226713

(57) **Abstract**

This application relates to the communication field, and in particular, to a method and an apparatus supporting beam training. This solution may be applied to a wireless local area network system supporting 802.11 series protocols such as a next-generation Wi-Fi protocol of IEEE 802.11ax like 802.11be, Wi-Fi 7, or EHT, or a next generation of 802.11be like Wi-Fi 8, or may be applied to a UWB-based wireless personal area network system or a sensing system. The method includes: generating first information, where the first information includes direction information and quantity information, the direction information indicates M directions, and the quantity information indicates a quantity N of repeated transmissions in each of the M directions, and sending the first information in a second frequency band. According to the foregoing method, in an initial process of establishing high-frequency communication, both a transmit end and a receive end can perform beam training by using a directional beam. This can extend a communication reachable range.

## Description

This application claims priority to Chinese Patent Application No. 202210562900.X, filed on May 23, 2022 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

In a wireless local area network (wireless local area network, WLAN), if a station needs to establish a connection with an access point, the station first needs to be capable of receiving a signal sent by the access point, and the access point also needs to be capable of receiving a signal sent by the station to the access point. In low-frequency (for example, sub-7 GHz or below 7 gigahertz (GHz)) communication, both the station and the access point can send and receive signals in an omnidirectional manner, to achieve the foregoing objective. In high-frequency (for example, above 45 GHz) communication, because signal attenuation is larger, the station and the access point first find an appropriate sending direction or receiving direction through beam training, to implement communication reachability.

Currently, an initial manner of establishing high-frequency communication is as follows: One end of a transceiver device performs directional transmit beam sweeping, and the other end performs quasi-omnidirectional receive beam sweeping. Alternatively, one end performs quasi-omnidirectional transmit beam sweeping, and the other end performs directional receive beam sweeping. However, a communication reachable range in this manner is not high.

### SUMMARY

This application provides a communication method and apparatus. In an initial process of establishing communication, both a transmit end and a receive end can perform beam training by using a directional beam. This can extend a communication reachable range.

According to a first aspect, a communication method is provided. The method may be performed by a first device, or may be performed by a chip, a circuit, or a module configured in a first device. This is not limited in this application. The following uses an example in which the first device performs the method for description.

The method includes: The first device generates first information, where the first information includes direction information and/or quantity information, the direction information indicates M directions for sending second information, the quantity information indicates a quantity N of repeated transmissions in each of the M directions, the second information is for beam training in a first frequency band, and N and M are positive integers; and the first device sends the first information in a second frequency band, where a highest frequency in the second frequency band does not exceed a lowest frequency in the first frequency band.

According to the foregoing solution, the first device may indicate, to the second device, the direction information and/or the quantity information of the second information for beam training. Further, the second device may receive or send the second information based on the direction information and/or the quantity information, to complete beam training. Because the second information is sent in the M directions, and is repeatedly sent in each direction N times, a transmit end device of the second information can train a transmit beam M times based on the M sending directions, and a receive end device of the second information can train a receive beam N times based on the quantity N of repeated transmissions in each direction. In other words, the transmit end and the receive end can perform beam training in a bidirectional mode. This helps extend a communication reachable range.

In addition, in this application, the first device may indicate, to the second device in a communication process in the second frequency band, a configuration parameter of the second information required for communication in the first frequency band. In this way, in an initial process of establishing communication in the first frequency band, beam training can be performed in the bidirectional mode, and communication efficiency can be improved through coordination between the first frequency band and the second frequency band.

It should be understood that the first device may be a station, an access point, or a personal basic service set control point ((personal basic service set, PBSS) control point, PCP).

With reference to the first aspect, in some implementations of the first aspect, the second information includes N groups of elements, each of the N groups of elements is the same, and each of the N groups of elements includes M elements; or the second information includes N groups of PPDUs, each of the N groups of PPDUs is the same, and each of the N groups of PPDUs includes M PPDUs.

Optionally, each of the M elements or each of the M PPDUs indicates one of the M directions.

With reference to the first aspect, in some implementations of the first aspect, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

With reference to the first aspect, in some implementations of the first aspect, the signaling field includes at least one of the following: beam information, where the beam information includes at least one of a first identifier, a second identifier, a third identifier, and a fourth identifier, the first identifier is used to identify a sector for sending each element or each PPDU, the second identifier is used to identify an antenna for sending each element or each PPDU, the third identifier is used to identify a beam for sending each element or each PPDU, and the fourth identifier is used to identify beamforming for sending each element or each PPDU; a check bit, where the check bit is used to check the signaling field; count information, where the count information indicates a location of each element or each PPDU in the second information; and third information, where the third information is used to identify the second information.

With reference to the first aspect, in some implementations of the first aspect, the method further includes: The first device sends or receives the second information in the first frequency band.

With reference to the first aspect, in some implementations of the first aspect, that the first device sends the second information includes: The first device sends the M elements in the M directions respectively, where each of the M elements is sent N times; or the first device sends the M PPDUs in the M directions respectively, where each of the M PPDUs is sent N times.

Optionally, the corresponding same elements in the N groups of elements are sent in a same sending direction.

Optionally, "sending the M elements in the M directions respectively" may be understood as sending one of the M elements in each of the M directions; and "sending the M PPDUs in the M directions respectively" may be understood as sending one of the M PPDUs in each of the M directions.

With reference to the first aspect, in some implementations of the first aspect, that the first device receives the second information includes: The first device receives the M elements or the M PPDUs in a same receiving direction, and the first device receives the second information in N directions.

Optionally, the corresponding same elements in the N groups of elements are received in different receiving directions.

With reference to the first aspect, in some implementations of the first aspect, the first information includes time information, and the time information indicates a start moment and/or duration for sending the second information.

With reference to the first aspect, in some implementations of the first aspect, the first information is carried in a first frame, the first frame is for beam training in the first frequency band, and the first frame is a beacon frame, a request frame, a response frame, an announcement frame, or a trigger frame.

According to a second aspect, a communication method is provided. The method may be performed by a second device, or may be performed by a chip, a circuit, or a module configured in a second device. This is not limited in this application. The following uses an example in which the second device performs the method for description.

The method includes: The second device receives first information in a second frequency band, where the first information includes direction information and/or quantity information, the direction information indicates M directions for sending second information, the quantity information indicates a quantity N of repeated transmissions in each of the M directions, the second information is for beam training in a first frequency band, and N and M are positive integers; and the second device sends or receives the second information in the first frequency band, where a highest frequency in the second frequency band does not exceed a lowest frequency in the first frequency band.

According to the foregoing solution, the first device may indicate, to the second device, the direction information and/or the quantity information of the second information for beam training. Further, the second device may receive or send the second information based on the direction information and/or the quantity information, to complete beam training. Because the second information is sent in the M directions, and is repeatedly sent in each direction N times, a transmit end device of the second information can train a transmit beam M times based on the M sending directions, and a receive end device of the second information can train a receive beam N times based on the quantity N of repeated transmissions in each direction. In other words, the transmit end and the receive end can perform beam training in a bidirectional mode. This helps extend a communication reachable range.

In addition, in this application, the first device may indicate, to the second device in a communication process in the second frequency band, a configuration parameter of the second information required for communication in the first frequency band. In this way, in an initial process of establishing communication in the first frequency band, beam training can be performed in the bidirectional mode, and communication efficiency can be improved through coordination between the first frequency band and the second frequency band.

It should be understood that the second device may be a station, an access point, or a personal basic service set control point ((personal basic service set, PBSS) control point, PCP).

With reference to the second aspect, in some implementations of the second aspect, the second information includes N groups of elements, each of the N groups of elements is the same, and each of the N groups of elements includes M elements; or the second information includes N groups of PPDUs, each of the N groups of PPDUs is the same, and each of the N groups of PPDUs includes M PPDUs.

Optionally, each of the M elements or each of the M PPDUs indicates one of the M directions.

With reference to the second aspect, in some implementations of the second aspect, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

With reference to the second aspect, in some implementations of the second aspect, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

With reference to the second aspect, in some implementations of the second aspect, that the second device receives the second information includes: The second device receives the M elements or the M PPDUs in a same receiving direction, and the second device receives the second information in N directions.

With reference to the second aspect, in some implementations of the second aspect, that the second device sends the second information includes: The second device sends the M elements in the M directions respectively, where each of the M elements is sent N times; or the second device sends the M PPDUs in the M directions respectively, where each of the M PPDUs is sent N times.

Optionally, the corresponding same elements in the N groups of elements are sent in a same sending direction.

With reference to the second aspect, in some implementations of the second aspect, the first information includes time information, and the time information indicates a start moment and/or duration for sending the second information.

With reference to the second aspect, in some implementations of the second aspect, the first information is carried in a first frame, the first frame is for beam training in the first frequency band, and the first frame is a beacon frame, a request frame, a response frame, an announcement frame, or a trigger frame.

According to a third aspect, a communication method is provided. The method may be performed by a first device, or may be performed by a chip, a circuit, or a module configured in a first device. This is not limited in this application. The following uses an example in which the first device performs the method for description.

The method includes: The first device generates second information, where the second information is for beam training in a first frequency band, the second information includes N groups of elements, each of the N groups of elements is the same, and each of the N groups of elements includes M elements; or the second information includes N groups of PPDUs, each of the N groups of PPDUs is the same, each of the N groups of PPDUs includes M PPDUs, and N and M are positive integers; and the first device sends the second information in the first frequency band.

According to the foregoing solution, because the second information includes the N groups of elements/PPDUs, and each of the N groups includes the M different elements/PPDUs, a transmit end device of the second information can train a transmit beam M times based on the M different elements/PPDUs, and a receive end device of the second information can train a receive beam N times based on N same elements/PPDUs repeatedly sent in each direction. In other words, the transmit end and the receive end can perform beam training in a bidirectional mode. This helps extend a communication reachable range.

It should be understood that the first device may be a station, an access point, or a personal basic service set control point ((personal basic service set, PBSS) control point, PCP).

With reference to the third aspect, in some implementations of the third aspect, the method further includes: The first device obtains first information, where the first information includes direction information and/or quantity information, the direction information indicates M directions for sending the second information, and the quantity information indicates a quantity N of repeated transmissions in each of the M directions; and the first device sends the first information in a second frequency band, where a highest frequency in the second frequency band does not exceed a lowest frequency in the first frequency band.

With reference to the third aspect, in some implementations of the third aspect, that the first device sends the second information in the first frequency band includes: The first device sends the second information in the first frequency band based on the first information.

With reference to the third aspect, in some implementations of the third aspect, that the first device sends the second information based on the first information includes: The first device sends the M elements in the M directions respectively, where each of the M elements is sent N times; or the first device sends the M PPDUs in the M directions respectively, where each of the M PPDUs is sent N times.

With reference to the third aspect, in some implementations of the third aspect, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

With reference to the third aspect, in some implementations of the third aspect, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

With reference to the third aspect, in some implementations of the third aspect, the first information includes time information, and the time information indicates a start moment and/or duration for sending the second information.

With reference to the third aspect, in some implementations of the third aspect, the first information is carried in a first frame, the first frame is for beam training in the first frequency band, and the first frame is a beacon frame, a request frame, a response frame, an announcement frame, or a trigger frame.

According to a fourth aspect, a communication method is provided. The method may be performed by a second device, or may be performed by a chip, a circuit, or a module configured in a second device. This is not limited in this application. The following uses an example in which the second device performs the method for description.

The method includes: The second device receives second information in a first frequency band, where the second information is for beam training in the first frequency band, the second information includes N groups of elements, each of the N groups of elements is the same, and each of the N groups of elements includes M elements; or the second information includes N groups of PPDUs, each of the N groups of PPDUs is the same, each of the N groups of PPDUs includes M PPDUs, and N and M are positive integers; and the second device parses the second information.

According to the foregoing solution, because the second information includes the N groups of elements/PPDUs, and each of the N groups includes the M different elements/PPDUs, a transmit end device of the second information can train a transmit beam M times based on the M different elements/PPDUs, and a receive end device of the second information can train a receive beam N times based on N same elements/PPDUs repeatedly sent in each direction. In other words, the transmit end and the receive end can perform beam training in a bidirectional mode. This helps extend a communication reachable range.

It should be understood that the second device may be a station, an access point, or a personal basic service set control point ((personal basic service set, PBSS) control point, PCP).

With reference to the fourth aspect, in some implementations of the fourth aspect, the method further includes: The second device receives first information in a second frequency band, where the first information includes direction information and/or quantity information, the direction information indicates M directions for sending the second information, the quantity information indicates a quantity N of repeated transmissions in each of the M directions, and a highest frequency in the second frequency band does not exceed a lowest frequency in the first frequency band.

With reference to the fourth aspect, in some implementations of the fourth aspect, that the second device receives second information in a first frequency band includes: The second device receives the second information in the first frequency band based on the first information.

With reference to the fourth aspect, in some implementations of the fourth aspect, that the second device receives the second information based on the first information includes: The second device receives the M elements or the M PPDUs in a same receiving direction, and the second device receives the second information in N directions.

With reference to the fourth aspect, in some implementations of the fourth aspect, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

With reference to the fourth aspect, in some implementations of the fourth aspect, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

With reference to the fourth aspect, in some implementations of the fourth aspect, the first information includes time information, and the time information indicates a start moment and/or duration for sending the second information.

With reference to the fourth aspect, in some implementations of the fourth aspect, the first information is carried in a first frame, the first frame is for beam training in the first frequency band, and the first frame is a beacon frame, a request frame, a response frame, an announcement frame, or a trigger frame.

According to a fifth aspect, a communication apparatus is provided. The communication apparatus has functions of implementing the method according to any one of the first aspect, the second aspect, the third aspect, and the fourth aspect, or any one of the possible implementation of these aspects. The function may be implemented by hardware, or may be implemented by hardware executing corresponding software. The hardware or the software includes one or more units corresponding to the foregoing functions.

According to a sixth aspect, a communication apparatus is provided, including a processor and a memory. Optionally, the apparatus may further include a transceiver. The memory is configured to store a computer program, and the processor is configured to: invoke and run the computer program stored in the memory, and control the transceiver to send and receive signals, to enable the communication apparatus to perform the method according to any one of the first aspect, the second aspect, the third aspect, and the fourth aspect, or any one of the possible implementations of these aspects.

According to a seventh aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the first aspect, the second aspect, the third aspect, and the fourth aspect, or any one of the possible implementations of these aspects is performed.

According to an eighth aspect, a computer-readable storage medium is provided. The computer-readable storage medium stores computer instructions. When the computer instructions are run on a computer, the method according to any one of the first aspect to the fourth aspect or any one of the possible implementations of these aspects is performed.

According to a ninth aspect, a computer program product is provided. The computer program product includes computer program code. When the computer program code is run on a computer, the method according to any one of the first aspect to the fourth aspect or any one of the possible implementations of these aspects is performed.

According to a tenth aspect, a wireless communication system is provided, including the first device according to the first aspect and/or the second device according to the second aspect, or including the first device according to the third aspect and/or the second device according to the fourth aspect.

### BRIEF DESCRIPTION OF DRAWINGS

FIG. 1 is a diagram of an application scenario to which an embodiment of this application is applicable;
FIG. 2 is a diagram of a structure of a BI;
FIG. 3 shows a high-frequency beamforming training procedure;
FIG. 4 is a schematic flowchart of a communication method 200 according to an embodiment of this application;
FIG. 5 and FIG. 6 each are a diagram of a format and a sending form of information #1 (an example of second information) according to an embodiment of this application;
FIG. 7 and FIG. 8 each are a diagram of a format and a sending form of information #2 (another example of second information) according to an embodiment of this application;
FIG. 9 is a diagram of a format of an element or a PPDU according to an embodiment of this application;
FIG. 10 is a schematic flowchart of a communication method 300 according to an embodiment of this application;
FIG. 11 is a diagram of three application scenarios according to an embodiment of this application;
FIG. 12 is a diagram of a communication apparatus according to an embodiment of this application;
FIG. 13 is a diagram of a communication apparatus according to an embodiment of this application; and
FIG. 14 is a diagram of a communication apparatus according to an embodiment of this application.

### DESCRIPTION OF EMBODIMENTS

The following describes technical solutions of this application with reference to accompanying drawings.

The technical solutions provided in embodiments of this application may be applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, an extremely high throughput (extremely high throughput, EHT), 802.11ad, 802.11ay, or 802.11bf, are supported. For another example, a next-generation protocol of 802.11be or Wi-Fi 8, is supported. The technical solutions provided in embodiments of this application may be applied to an ultra-wideband (Ultra wide band, UWB)-based wireless personal area network system or a sensing (sensing) system. For example, 802.11bf includes two categories of standards in low frequency (sub-7 GHz) and high frequency (60 GHz). Sub-7 GHz is implemented mainly based on standards such as 802.11ac, 802.11ax, 802.11be, and a next-generation standard of 802.11be. 60 GHz is implemented mainly based on standards such as 802.11ad, 802.11ay, and a next-generation standard of 802.11ay. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The foregoing communication systems applicable to this application are only examples for descriptions, and the communication systems applicable to this application are not limited thereto. This is uniformly described herein, and details are not described below again.

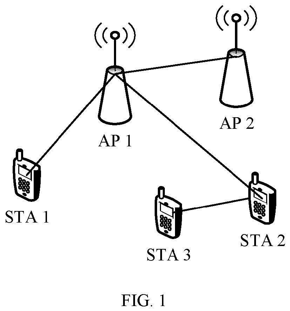

FIG. 1 is an example of a system architecture applicable to an embodiment of this application. As shown in FIG. 1, a communication method provided in this application is applicable to data communication between an access point (access point, AP) and one or more stations (station, STA) (for example, data communication between an AP 1 and a STA 1, and between the AP 1 and a STA 2), and is also applicable to data communication between APs (for example, data communication between the AP 1 and an AP 2) and data communication between STAs (for example, data communication between the STA 2 and a STA 3).

The access point may be an access point used by a terminal (for example, a mobile phone) to access a wired (or wireless) network, and is mainly deployed at home, in a building, and in a campus. A typical coverage radius is tens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet.

Specifically, the access point may be a terminal or a network device with a Wi-Fi chip. The network device may be a router, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device supporting the 802.11be standard. Alternatively, the access point may be a device supporting a plurality of WLAN standards of the 802.11 family, such as 802.11ax, 802.11ac, 802.11n, 802.11g, 802.11b, 802.11a, and a next generation of 802.11be. The access point in this application may be a high efficiency (high efficient, HE) AP, an extremely high throughput (extremely high throughput, EHT) AP, or an access point applicable to a future generation Wi-Fi standard.

It should be understood that, in standards such as 802.11ad and 802.11ay, communication between a PCP and a STA and communication between PCPs are allowed, and behavior corresponding to the PCP is similar to that of the AP. Unless otherwise specified below in this application, it may be considered that the solution applied to the access point in this application is also applicable to the PCP.

The station may be a wireless communication chip, a wireless sensor, a wireless communication terminal, or the like, and may also be referred to as a user, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in the 5G network, a terminal device in the future 6G network, a terminal device in the PLMN, or the like. This is not limited in embodiments of this application.

For example, the station may be a mobile phone, a tablet computer, a set-top box, a smart television, a smart wearable device, a vehicle-mounted communication device, or a computer that supports a Wi-Fi communication function; or may be an internet of things (internet of things, IoT) node or a sensor that supports a Wi-Fi communication function; or may be a smart camera, a smart remote control, or a smart water or electricity meter in a smart home, or a sensor in a smart city that supports a Wi-Fi communication function. Optionally, the station may support the 802.11be standard. Alternatively, the station may support the plurality of WLAN standards of the 802.11 family, such as 802.11ax, 802.11ac, 802.11n, 802.11g, 802.11b, 802.11a, and the next generation of 802.11be.

In a WLAN, if a station needs to establish a connection with an access point, the station first needs to be capable of receiving a signal sent by the access point, and the access point also needs to be capable of receiving a signal sent by the station to the access point. In low-frequency (for example, sub-7 GHz or below 7 GHz) communication, both the station and the access point can send and receive signals in an omnidirectional manner, to achieve the foregoing objective. In high-frequency (for example, above 45 GHz) communication, because signal attenuation is larger, the station and the access point need to first find an appropriate sending direction or receiving direction through beam training, to implement communication reachability. Compared with the omnidirectional manner, a directional beam can transmit a longer distance, and can meet an actual transmission distance requirement.

It should be understood that, in this application, omnidirectional is used as an example for description, but "omnidirectional" may alternatively be replaced with "quasi-omnidirectional (quasi-omni)." This is not limited.

In this application, the access point and the station may perform beam training by using a signal frame in a beacon interval (beacon interval, BI). The following describes a BI.

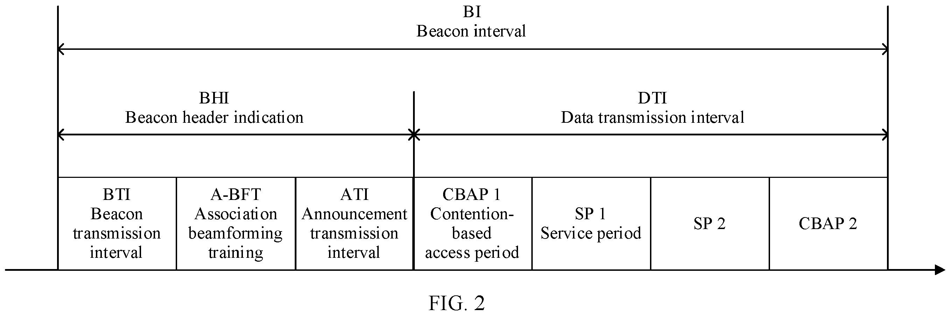

FIG. 2 is a diagram of a structure of a BI. Refer to FIG. 2. A time axis may be divided into a plurality of BIs, and each BI includes a beacon header interval (beacon header interval, BHI) and a data transmission interval (data transmission interval, DTI). The BHI includes a beacon transmission interval (beacon transmission interval, BTI), association beamforming training (association beamforming training, A-BFT), and an announcement transmission interval (announcement transmission interval, ATI). The DTI includes several subintervals, and the several subintervals are divided into a contention-based access period (contention-based access period, CBAP) (for example, a CBAP 1 and a CBAP 2 shown in FIG. 2) and a service period (service period, SP) (for example, an SP 1 and an SP 2 shown in FIG. 2) based on an access manner. The service period means that scheduling transmission can be performed in the time period without contention.

Currently, a manner of establishing high-frequency communication is as follows: One end of a transceiver device performs directional transmit beam sweeping, and the other end performs quasi-omnidirectional receive beam sweeping. Alternatively, one end performs quasi-omnidirectional transmit beam sweeping, and the other end performs directional receive beam sweeping. A high-frequency communication establishment process is also referred to as a high-frequency beamforming training process.

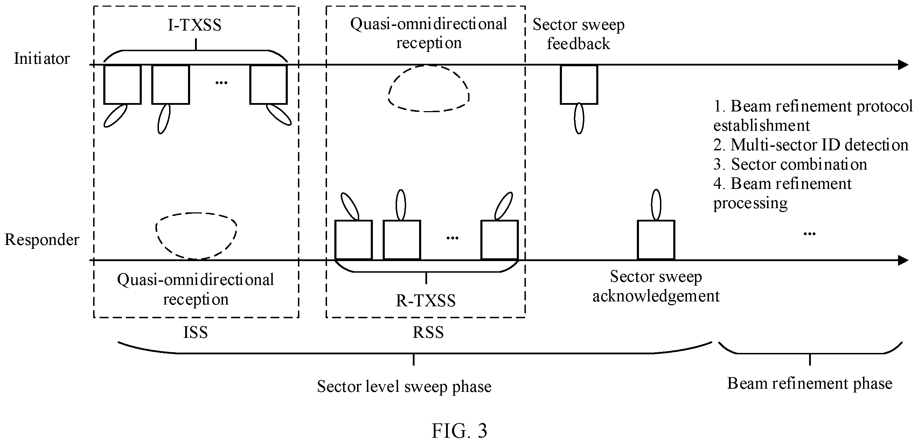

FIG. 3 shows a high-frequency beamforming training procedure. As shown in FIG. 3, a high-frequency beamforming training process includes a sector level sweep (sector level sweep, SLS) phase and a beam refinement (beam refinement) phase.

On the whole, the procedure shown in FIG. 3 can enable an initiator and a responder to complete respective beam training as a transmit end and a receive end. High-frequency beamforming training starts from the SLS phase initiated by the initiator (initiator). The SLS phase includes initiator sector sweep (initiator sector sweep, ISS), responder sector sweep (responder sector sweep, RSS), and sector sweep feedback (sector sweep feedback). Optionally, the SLS phase may further include sector sweep acknowledgement. The SLS phase is to enable the two devices to meet at least a basic high-robustness and low-rate communication requirement. Generally, in the SLS phase, transmit beam training, for example, an initiator transmit sector sweep (initiator transmit sector sweep, I-TXSS) process and a responder transmit sector sweep (responder transmit sector sweep, R-TXSS) process shown in FIG. 3, is mainly completed.

After the SLS phase, if required by the initiator or the responder, a beam refinement protocol (beam refinement protocol, BRP) phase may further exist. The BRP phase is to provide receive end training and beam refinement at the transmit end and the receive end. Beam refinement may also be referred to as antenna weight vector (antenna weight vector, AWV) refinement. The AWV is a vector of weights describing the excitation (amplitude and phase) for each element of an antenna array (A vector of weights describing the excitation (amplitude and phase) for each element of an antenna array). Specifically, the BRP phase mainly includes processes such as BRP establishment, multi-sector ID detection, sector combination, and beam refinement processing.

In addition, a beam training method for beam tracking (beam tracking) may further exist in beamforming.

It can be learned from the foregoing content that, in the initial SLS phase, a connection needs to be first established through directional beam sweeping at one end and quasi-omnidirectional beam sweeping at the other end, to meet a most basic initial communication requirement.

The following briefly describes a process of the SLS phase. Details are described below.
(1) In the ISS phase, the initiator directionally sends a frame #1 in a plurality of directions, and the responder receives the frame #1 in a quasi-omnidirectional mode.
(2) In the RSS phase, the responder directionally sends a frame #2 in a plurality of directions. The frame #2 includes an optimal transmit beam that is of the initiator and that is obtained by the responder in the ISS phase. The initiator receives the frame #2 in the quasi-omnidirectional mode.
(3) The initiator directionally sends a frame #3 by using the optimal transmit beam of the initiator in the frame #2. The frame #3 may be referred to as a sector sweep feedback frame, and the frame #3 includes an optimal transmit beam that is of the responder and that is obtained by the initiator in the RSS phase.
(4) Optionally, further, the responder sends a frame #4 by using the optimal transmit beam of the responder in the frame #3, and the frame #4 may be referred to as a sector sweep acknowledgement frame.

In the foregoing manner, the initiator and the responder obtain, from each other, the optimal transmit beams that can communicate with peer devices. It should be noted that, in the SLS phase, only transmit beam training is generally completed, and receive beam direction training is not completed. Therefore, only a basic communication requirement can be met.

In addition, the I-TXSS and the R-TXSS in FIG. 3 may be respectively replaced with initiator receive sector sweep (initiator receive sector sweep, I-RXSS) and responder receive sector sweep (responder receive sector sweep, R-RXSS). For example, the R-TXSS is replaced with the R-RXSS. The R-RXSS process is also applied to the RSS phase. However, different from the R-TXSS process in which different directional beams are sent, in the R-RXSS process, beams sent by the responder correspond to a same antenna pattern (antenna pattern). For example, a quasi-omnidirectional beam may be always sent. The initiator performs directional reception instead of quasi-omnidirectional reception. The I-RXSS and the R-RXSS are to meet a requirement of a device with a weak transmit end capability, and a basic communication requirement is met by enabling a peer device to perform receive end beam training.

It should be understood that the SLS phase shown in FIG. 3 may occur in the DTI phase shown in FIG. 2, or may occur in the BTI and the A-BFT phases. When the SLS phase occurs in the BTI and the A-BFT phases, the sector sweep acknowledgement process in the SLS phase in FIG. 3 does not exist.

In 802.11ad, initial beam training related to a STA and a PCP/AP is mainly completed in BTI and A-BFT phases. The BTI corresponds to an ISS phase, and the A-BFT corresponds to an RSS phase and a sector sweep feedback phase. A specific process is as follows:
(1) For one BI, in the BTI phase, the PCP/AP may send a plurality of beacon (beacon) frames based on a sector number, that is, an I-TXSS process. The beacon frame may be used for downlink sector sweep, the beacon frame includes an A-BFT length (A-BFT length) field, the field indicates a quantity of slots in the A-BFT phase, and each slot may be referred to as a sector sweep slot (SSW slot, which may also be referred to as aSSSlotTime). The STA receives beams from all directions by using a quasi-omnidirectional antenna, and records an optimal transmit beam of the PCP/AP.
(2) In the A-BFT phase, the STA receiving the beacon frame may randomly select a slot in [0, A-BFT Length-1] for access, and sequentially send a sector sweep (sector sweep, SSW) frame by using a directional antenna, that is, an R-TXSS process, and the frame includes the optimal transmit beam of the PCP/AP. The PCP/AP then receives beams from all directions by using the quasi-omnidirectional antenna, and records an optimal transmit beam of the STA.
(3) In the sector sweep feedback phase, the PCP/AP directionally feeds back the optimal transmit beam of the STA to the STA by using the optimal transmit beam of the PCP/AP reported by the STA in step (2), and the STA is in a quasi-omnidirectional receive mode.

In this way, the PCP/AP and the STA can complete transmit end beamforming training, to meet a basic communication requirement.

To meet access training requirements of more users, enhanced directional multi-gigabit (enhanced directional multi-gigabit, EDMG) is introduced in 802.11ay. Different from conventional directional multi-gigabit (directional multi-gigabit, DMG) in 802.11ad, the EDMG can transmit both a conventional SSW frame and a short SSW (short SSW) frame in the A-BFT phase. A length of the short SSW frame is shorter than a length of the conventional SSW frame, and the EDGM STA can transmit more SSW frames in one slot. In addition, the EDMG STA may use a BTI phase to obtain more A-BFT slots and the like. On the whole, an SLS procedure in 802.11ay is basically the same as that in 802.11ad, and details are not described herein again.

In the foregoing high-frequency beamforming training process, for communication establishment, one end of the two devices performs directional transmit beam sweeping, and the other end performs quasi-omnidirectional reception. Alternatively, one end performs quasi-omnidirectional transmission, and the other end performs directional receive beam sweeping. In this manner, at the beginning of access, a communication range is already limited to a range being quasi-omnidirectional at one end and directional at the other end. Therefore, a communication reachable range is not high.

In view of this, this application provides a communication method. In an initial process of establishing high-frequency communication, both a transmit end and a receive end can perform beam training by using a directional beam. This can extend a high-frequency communication reachable range.

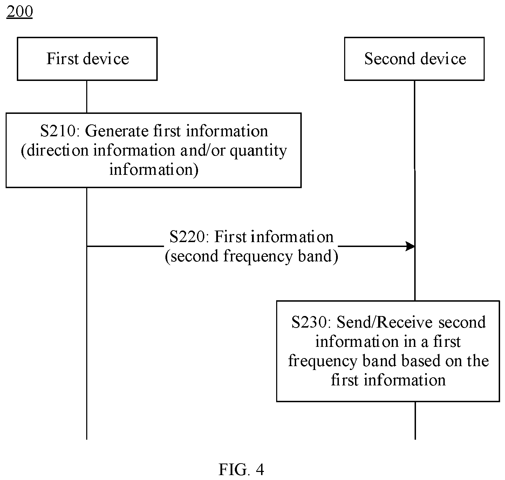

FIG. 4 is a schematic flowchart of a communication method 200 according to an embodiment of this application. S210: A first device generates first information.

The first information may also be referred to as configuration information, and the first information indicates a configuration parameter of second information. The configuration parameter of the second information may include a sending manner of the second information and a type of the second information.

The sending manner of the second information may include M sending directions of the second information and a quantity N of repeated transmissions in each of the M sending directions.

Specifically, the first information includes direction information and/or quantity information.

The direction information indicates the M directions for sending the second information. In other words, the direction information indicates the M sending directions of the second information, and M is a positive integer.

Specifically, the second information may include N×M pieces of information, and the N×M pieces of information may be sent in the M different sending directions. The first information may include the direction information indicating the M different sending directions. In other words, the direction information indicates to send M different pieces of information in the second information in the M directions respectively, and one of the M different pieces of information is sent in each direction. For example, the direction information may be in a form of indication information, and a value of the indication information is a value of M.

Optionally, M is greater than 2.

For example, a value of M may be any integer from 2 to 100.

The N×M pieces of information may be N×M elements or N×M physical layer protocol data units (physical protocol data unit, PPDU). Correspondingly, the type of the second information may be a type 1 or a type 2.

Specifically, in the type 1, the second information includes N groups of elements, each of the N groups of elements is the same, and each of the N groups of elements includes M elements.

For example, the M elements are in a one-to-one correspondence with the M sending directions. In other words, one of the M elements indicates one of the M directions.

To be specific, in the type 1, the second information includes N×M elements, the M different elements form one group of elements, and the second information includes the N groups of elements.

It should be noted that the M elements or one group of elements mentioned in this application are the M different elements in the second information.

Specifically, in the type 2, the second information includes N groups of PPDUs, each of the N groups of PPDUs is the same, and each of the N groups of PPDUs includes M PPDUs.

It should be understood that the M PPDUs are in a one-to-one correspondence with the M sending directions. In other words, one of the M PPDUs indicates one of the M directions.

To be specific, in the type 2, the second information includes N×M PPDUs, the M different PPDUs form one group of PPDUs, and the second information includes the N groups of PPDUs.

It should be noted that the M PPDUs or one group of PPDUs mentioned in this application are the M different PPDUs in the second information.

The second information is for beam training in a first frequency band. In other words, beam training can be performed at both a transmit end and a receive end by using a directional beam based on sending and receiving of the second information.

Specifically, an optimal transmit beam and an optimal receive beam of a transceiver device can be obtained based on sending and receiving of the second information.

The quantity information indicates a quantity N of repeated transmissions in each of the M sending directions. In other words, the quantity information indicates a quantity N of repeated transmissions of the first device in each sending direction, and N is a positive integer.

Specifically, the N×M pieces of information are sent in M different sending directions, that is, N pieces of information are sent in each direction. The N pieces of information may be same information. In other words, information sent in each of the M sending directions is repeatedly sent N times. The first information may include the quantity information indicating the quantity N of repeated transmissions. In other words, the quantity information indicates that one of the M pieces of different information is sent N times in each direction. For example, the quantity information may be in a form of indication information, and a value of the indication information is a value of N.

Optionally, N is greater than 2.

Optionally, the first information includes type information, the type information indicates a type of the second information, and the type of the second information may include the type 1 and the type 2.

Optionally, the first information may further include time information, and the time information indicates a start moment and/or duration of the second information.

For example, if the second information is elements, the time information may indicate a start moment of the 1^{st} element and total duration of N×M elements in the second information.

Optionally, the time information may include a start moment of each element and duration of each element.

For another example, if the second information is PPDUs, the time information may indicate a start moment of the 1^{st} PPDU and total duration of N×M PPDUs in the second information.

Optionally, the time information may include a start moment of each PPDU and duration of each PPDU.

For another example, if the second information is PPDUs, the time information may indicate a start moment of each PPDU and duration of each PPDU in the second information.

Optionally, the duration may be understood as "a quantity related to a time period", and the duration may be indicated by using a lasting time length, or may be indicated by using a start moment and an end moment.

It should be understood that the duration may be a default value. In other words, the time information may not include the duration of the second information. Alternatively, the start moment may be implemented in a preconfigured manner. In this case, the time information may not include the start moment of the second information.

S220: The first device sends the first information in a second frequency band, and correspondingly, a second device receives the first information in the second frequency band.

A highest frequency in the second frequency band does not exceed a lowest frequency in the first frequency band. For example, the second frequency band is a frequency range of a low frequency in the WLAN, and the first frequency band is a frequency range of a high frequency in the WLAN. For example, the second frequency band may be a frequency band below 7 GHz, or the second frequency band may be a frequency band below 6 GHz. For example, the first frequency band may be a frequency band above 45 GHz, or the first frequency band may be a frequency band above 60 GHz.

In other words, in this application, the first device may indicate, in a low-frequency communication process, the configuration parameter of the second information required in high-frequency communication.

S230: The second device sends or receives the second information in the first frequency band.

For example, the second device sends or receives the second information in the first frequency band based on the first information.

Specifically, the second device may determine, based on the direction information in the first information, the M sending directions for sending the second information. Further, if the second device is the transmit end of the second information, the second device may send the second information based on the M sending directions. Alternatively, if the second device is the receive end of the second information, the second device may determine, based on the M sending directions, a receiving direction for receiving the second information.

Specifically, the second device may determine the quantity N of repeated transmissions in each of the M sending directions based on the quantity information in the first information. Optionally, if the second device is the transmit end of the second information, the second device may repeatedly send information in each direction N times based on the quantity information N. Alternatively, if the second device is the receive end of the second information, the second device may determine, based on the quantity information N, a receiving direction for receiving the second information.

The first device may be an AP or a STA, and the second device may also be an AP or a STA. In other words, if the second device is the transmit end of the second information, the receive end of the second information may be the first device, or may be another device. If the second device is the receive end of the second information, the transmit end of the second information may be the first device, or may be another device. The another device in this application is not a device at the transmit end of the first information.

For example, an AP #1 (an example of the first device) and a STA #1 (an example of the second device) negotiate for a configuration parameter of the second information via the first information. Further, the AP #1 sends the second information in the first frequency band based on the configuration parameter, the STA #1 receives the second information in the first frequency band based on the configuration parameter, and the AP #1 and the STA #1 complete beam training in the first frequency band based on sending and receiving of the second information. For another example, the AP #1 (an example of the first device) indicates, by using the first information, the configuration parameter of the second information between the STA #1 (an example of the second device) and the STA #2 (another example of the second device). Further, the STA #1 sends the second information in the first frequency band based on the configuration parameter, the STA #2 receives the second information in the first frequency band based on the configuration parameter, and the STA #1 and the STA #2 complete beam training in the first frequency band based on sending and receiving of the second information.

According to the solution provided in the foregoing embodiment, the first device may indicate, to the second device, the direction information and/or the quantity information of the second information for beam training. Further, the second device may receive or send the second information based on the direction information and/or the quantity information, to complete beam training. Because the second information is sent in the M directions, and is repeatedly sent in each direction N times, the transmit end device of the second information can train a transmit beam M times based on the M sending directions, and the receive end device of the second information can train a receive beam N times based on the quantity N of repeated transmissions in each direction. In other words, the transmit end and the receive end can perform beam training in a bidirectional mode. This helps extend a communication reachable range.

In addition, in this application, the first device may indicate, to the second device in the communication process in the second frequency band, the configuration parameter of the second information required for communication in the first frequency band. In this way, in an initial process of establishing communication in the first frequency band, beam training can be performed in the bidirectional mode, and communication efficiency can be improved through coordination between the first frequency band and the second frequency band.

Optionally, in an implementation, the method 200 further includes: The first device sends the second information to or receives the second information from the second device in the first frequency band.

For example, the first device sends the second information to or receives the second information from the second device in the first frequency band based on the first information.

Specifically, when the type of the second information is the type 1, that the first device sends the second information to the second device includes: The first device sends M elements in M directions respectively, where each of the M elements is sent N times. Correspondingly, that the second device receives the second information in S230 includes: The second device receives the M elements in a same receiving direction, and the second device receives the second information in N receiving directions.

In other words, when the type of the second information is the type 1, the first device may send different elements in the M directions respectively, and each element is sent N times. Correspondingly, the second device may receive the elements in the M different directions in the same receiving direction, and receive, in the N different receiving directions, the elements that are repeatedly sent N times in each sending direction.

Specifically, when the type of the second information is the type 2, that the first device sends the second information to the second device includes: The first device sends M PPDUs in M directions respectively, where each of the M PPDUs is sent N times. Correspondingly, that the second device receives the second information in S230 includes: The second device receives the M PPDUs in a same receiving direction, and the second device receives the second information in N directions.

In other words, when the type of the second information is the type 2, the second device may send different PPDUs in the M directions respectively, and each PPDU is sent N times. Correspondingly, the second device may receive the PPDUs in the M different directions in the same receiving direction, and receive, in the N different receiving directions, the PPDUs that are repeatedly sent N times in each sending direction.

Specifically, when the type of the second information is the type 1, that the second device sends the second information in S230 includes: The second device sends M elements in M directions respectively, where each of the M elements is sent N times. Correspondingly, that the first device receives the second information includes: The first device receives the M elements in a same receiving direction, and the first device receives the second information in N receiving directions.

In other words, when the type of the second information is the type 1, the second device sends different elements in the M directions respectively, and each element is sent N times. Correspondingly, the first device may receive the elements in the M different directions in the same receiving direction, and receive, in the N different receiving directions, the elements that are repeatedly sent N times in each sending direction.

Specifically, when the type of the second information is the type 2, that the second device sends the second information in S230 includes: The second device sends M PPDUs in M directions respectively, where each of the M PPDUs is sent N times. Correspondingly, that the first device receives the second information includes: The first device receives the M PPDUs in a same receiving direction, and the first device receives the second information in N receiving directions.

In other words, when the type of the second information is the type 2, the second device sends different PPDUs in the M directions respectively, and each PPDU is sent N times. Correspondingly, the first device may receive the PPDUs in the M different directions in the same receiving direction, and receive, in the N different receiving directions, the PPDUs that are repeatedly sent N times in each sending direction.

Optionally, "sending the M elements in the M directions respectively" may be understood as sending one of the M elements in each of the M directions; and "sending the M PPDUs in the M directions respectively" may be understood as sending one of the M PPDUs in each of the M directions.

According to the foregoing solution, the transmit end device of the second information may send the second information in the M different directions based on the first information, and repeatedly send the second information in each direction N times. The receive end device of the second information may receive information in the M different directions in the same receiving direction, and receive, in the N different receiving directions, information that is repeatedly sent N times in each sending direction. In this way, the transmit end device can train the transmit beam M times based on the M sending directions, and the receive end device can train the receive beam N times based on the quantity N of repeated transmissions in each direction. In other words, the transmit end and the receive end can perform beam training in the bidirectional mode. This helps extend a communication reachable range.

It should be understood that, in the foregoing implementation, an example in which the second device exchanges the second information with the first device is used for description. However, in actual application, the second device may alternatively exchange the second information with another device, to complete beam training between the second device and the another device.

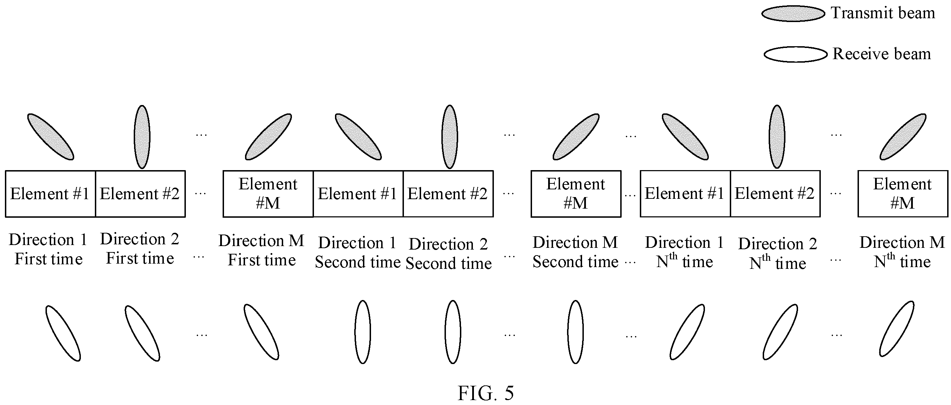

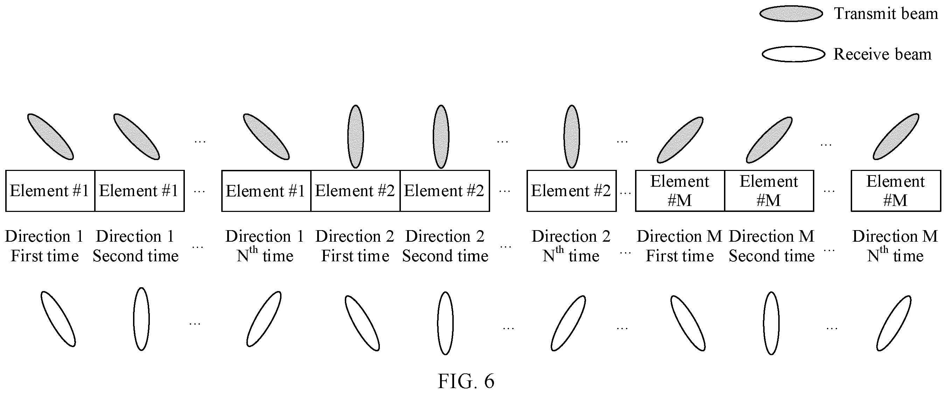

FIG. 5 and FIG. 6 each are a diagram of a format and a sending form of information #1 (an example of second information) according to an embodiment of this application.

FIG. 5 and FIG. 6 are two diagrams in which a type of the second information is a type 1. The information #1 may be considered as a PPDU. As shown in FIG. 5 and FIG. 6, the information #1 includes N groups of elements, each of the N groups of elements includes an element #1, an element #2, ..., and an element #M, and the element #1, the element #2, ..., and the element #M form an element set #A. For example, that "each of the N groups of elements is the same" may be understood as that each of the N groups of elements includes an element set #A. In other words, the information #1 includes N×M elements. The element #1, the element #2, ..., and the element #M each indicate one of the M directions. As shown in FIG. 5 and FIG. 6, each element #1 in the information #1 corresponds to a direction 1, each element #2 in the information #1 corresponds to a direction 2, ..., and each element #M in the information #1 corresponds to a direction M.

A device #A (an example of a first device, and also an example of a second device) may specifically send the information #1 to a device #B (an example of the second device, and also an example of the first device) in the following manner: The device #A sends the element #1, the element #2, ..., and the element #M in the M directions respectively, and repeatedly sends the element in each direction N times. The device #B receives the element #1, the element #2, ..., and the element #M in a same receiving direction, and the device #B receives, in N different directions, N elements #1 repeatedly sent in the direction 1, N elements #2 repeatedly sent in the direction 2, ..., and N elements #M repeatedly sent in the direction M.

In an implementation, that the device #A sends the information #1 includes: The device #A sends the element #1, the element #2, ..., and the element #M in the direction 1, the direction 2, ..., and the direction M respectively, and further repeats the foregoing sending operation N times, that is, the device #A changes a direction after a time period corresponding to each element expires. Correspondingly, that the device #B receives the information #1 includes: The device #B keeps a receive beam direction unchanged in a time period corresponding to every M elements, and changes a receiving direction once after the time period corresponding to every M elements expires, that is, the device #B changes the receiving direction N times. For details, refer to FIG. 5.

In another implementation, that the device #A sends the information #1 includes: The device #A repeatedly sends the element #1 N times in the direction 1, repeatedly sends the element #2 N times in the direction 2, ..., and repeatedly sends the element #M N times in the direction M. Correspondingly, that the device #B receives the information #1 includes: The device #B changes a receiving direction after a time period corresponding to each element expires. If element moments are divided into N×M element time periods, and a time period of the 1^{st} element of the information #1 is 1, receiving directions corresponding to the device #B in the x^{th} time period, the (N+x)^{th} time period, the (2N+x)^{th} time period, ..., and the ((M-1)N+x)^{th} time period are consistent. In other words, when the device #B receives the x^{th} element, the (N+x)^{th} element, the (2N+x)^{th} element, ..., and the ((M-1)N+x)^{th} element, corresponding receiving directions are consistent, where x is an integer, and 1 ≤ *x* ≤ *N.* For details, refer to FIG. 6.

In any one of the foregoing implementations, the device #A may train a transmit beam M times, and the device #B may train the receive beam N times.

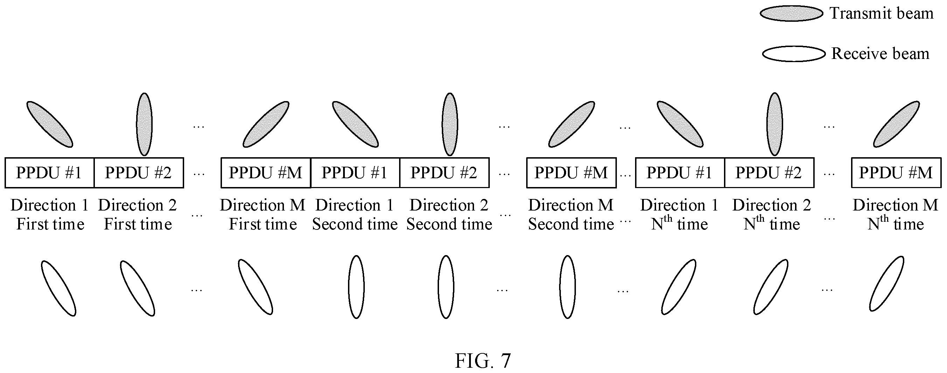

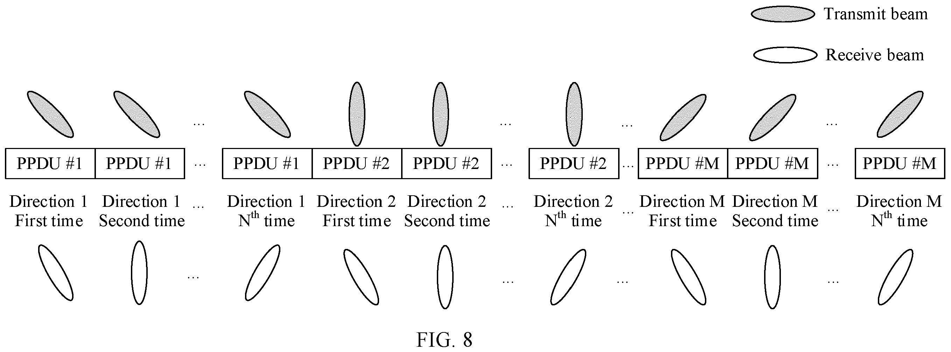

FIG. 7 and FIG. 8 each are a diagram of a format and a sending form of information #2 (another example of second information) according to an embodiment of this application.

FIG. 7 and FIG. 8 are two diagrams in which a type of the second information is a type 2. The information #2 may be considered as multiple PPDUs. As shown in FIG. 7 and FIG. 8, the information #2 includes N groups of PPDUs, each of the N groups of PPDUs includes a PPDU #1, a PPDU #2, ..., and a PPDU #M, and the PPDU #1, the PPDU #2, ..., and the PPDU #M form a PPDU set #A. For example, that "each of the N groups of PPDUs is the same" may be understood as that each of the N groups of PPDUs includes the PPDU set #A. In other words, the information #2 includes N×M PPDUs. The PPDU #1, the PPDU #2, ..., and the PPDU #M each indicate one of the M directions. As shown in FIG. 7 and FIG. 8, each PPDU #1 in the information #2 corresponds to a direction 1, each PPDU #2 in the information #2 corresponds to a direction 2, ..., and each PPDU #M in the information #2 corresponds to a direction M.

A device #A (an example of a first device, and also an example of a second device) may specifically send the information #2 to a device #B (an example of the second device, and also an example of the first device) in the following manner: The device #A sends the PPDU #1, the PPDU #2, ..., and the PPDU #M in the M directions respectively, and repeatedly sends the PPDU in each direction N times. The device #B receives the PPDU #1, the PPDU #2, ..., and the PPDU #M in a same receiving direction, and the device #B receives, in N different directions, N PPDUs #1 repeatedly sent in the direction 1, N PPDUs #2 repeatedly sent in the direction 2, ..., and N PPDUs #M repeatedly sent in the direction M.

In an implementation, that the device #A sends the information #2 includes: The device #A sends the PPDU #1, the PPDU #2, ..., and the PPDU #M in the direction 1, the direction 2, ..., and the direction M respectively, and further repeats the foregoing sending operation N times, that is, the device #A changes a direction after a time period corresponding to each PPDU expires. Correspondingly, that the device #B receives the information #2 includes: The device #B keeps a receive beam direction unchanged in a time period corresponding to every M PPDUs, and changes a receiving direction once after the time period corresponding to every M PPDUs expires, that is, the device #B changes the receiving direction N times. For details, refer to FIG. 7.

In another implementation, that the device #A sends the information #2 includes: The device #A repeatedly sends the PPDU #1 N times in the direction 1, repeatedly sends the PPDU #2 N times in the direction 2, ..., and repeatedly sends the PPDU #M N times in the direction M. Correspondingly, that the device #B receives the information #2 includes: The device #B changes a receiving direction after a time period corresponding to each PPDU expires. If PPDU moments are divided into N×M PPDU time periods, and a time period of the 1^{st} PPDU of the information #2 is 1, receiving directions corresponding to the device #B in the x^{th} time period, the (N+x)^{th} time period, the (2N+x)^{th} time period, ..., and the ((M-1)N+x)^{th} time period are consistent. In other words, when the device #B receives the x^{th} PPDU, the (N+x)^{th} PPDU, the (2N+x)^{th} PPDU, ..., and the ((M-1)N+x)^{th} PPDU, corresponding receiving directions are consistent, where x is an integer, and 1 ≤ *x* ≤ *N.* For details, refer to FIG. 8.

In any one of the foregoing implementations, the device #A may train a transmit beam M times, and the device #B may train the receive beam N times.

It should be understood that FIG. 5 to FIG. 8 are merely several examples of the second information provided in this embodiment of this application. A manner of sorting elements or PPDUs is not limited in this application.

In addition, the quantity N of repeated transmissions in this application may be a positive integer, or may be a sequence including positive integers. This is not limited in this application. For example, the quantity N of repeated transmissions may be {N₁, N₂, ..., and N_{M}}, where N₁, N₂, ..., and N_{M} are positive integers, and N₁, N₂, ..., and N_{M} may all have a same value, or at least two of N₁, N₂, ..., and N_{M} have different values. In other words, in this application, quantities of repeated transmissions in all directions may be the same or may be different. For example, sending may be repeated in the direction 1 for N₁ times, sending may be repeated in the direction 2 for N₂ times, ..., and sending may be repeated in the direction M for Nₘ times. In this case, quantities of elements in all groups in the second information may be the same or may be different, provided that each group of elements includes the element set #A. The element set #A includes M different elements. Alternatively, quantities of PPDUs in all groups in the second information may be the same or may be different, provided that each group of PPDUs includes the PPDU set #A. The PPDU set #A includes M different PPDUs.

Similarly, in this application, the quantity M of directions may be a positive integer, or may be a sequence including positive integers. This is not limited in this application. For example, the quantity M of directions may be {M₁, M₂ ..., and M_{N}}, where M₁, M₂ ..., and M_{N} are positive integers, and M₁, M₂ ..., and M_{N} may all have a same value, or at least two of M₁, M₂ ..., and M_{N} have different values. In other words, in this application, M₁ elements may be sent in M₁ directions, M₂ elements may be sent in M₂ directions, ..., and M_{N} elements may be sent in M_{N} directions, provided that the M₁ elements, the M₂ elements, ..., and the M_{N} elements all include the element set #A. Alternatively, M₁ PPDUs may be sent in M₁ directions, M₂ PPDUs may be sent in M₂ directions, ..., and M_{N} PPDUs may be sent in M_{N} directions, provided that the M₁ PPDUs, the M₂ PPDUs, ..., and the M_{N} PPDUs all include the PPDU set #A.

It should be further understood that, due to a limitation of a transmission opportunity or a limitation of sending duration, transmission of the second information may be completed in a plurality of segments, and a specific quantity of segments is not limited. For example, when the type of the second information is the type 1, a transceiver device may first complete sending and receiving of some of the N×M elements, and then complete sending and receiving of remaining elements of the N×M elements. For example, when the type of the second information is the type 2, a transceiver device may first complete sending and receiving of some of the N×M PPDUs, and then complete sending and receiving of remaining PPDUs of the N×M PPDUs.

In addition, transmission of the first information may alternatively be completed in a plurality of segments. For example, some direction information and quantity information in the first information are first sent, and then remaining direction information and quantity information in the first information are sent. For another example, the direction 1 and time information related to the direction 1 are first indicated, and then the direction 2 and time information related to the direction 2 are indicated.

It should be further understood that the first information and the second information may be alternately transmitted. For example, some direction information and quantity information in the first information are first sent, and some elements/PPDUs in the second information are sent and received based on the direction information and quantity information. Then, remaining direction information and quantity information in the first information are sent, and remaining elements/PPDUs in the second information are sent and received based on the remaining direction information and quantity information. The following provides several examples of alternate transmission of the first information and the second information.

In an example, the first information may not include the quantity information. For example, the first information includes N pieces of direction information, and the N pieces of direction information are sent in N segments. The second information is also sent in N segments.

For example, after receiving or sending one piece of direction information, the first device performs sending in each direction once based on the direction information. After receiving one piece of direction information, the second device performs receiving in a same receiving direction based on the direction information, and receiving directions N times are different. The N×M pieces of information in the second information can be transmitted based on the N pieces of direction information that are sent in segments. In this case, it may be considered by default that a transmission process of the second information is performed in the manner shown in FIG. 5 or FIG. 7.

In another example, the first information may not include the direction information. For example, the first information includes M pieces of quantity information, and the M pieces of quantity information are sent in M segments. The second information is also sent in M segments.

For example, after receiving or sending the first piece of quantity information, the first device performs repeated sending N times in the direction 1 based on the quantity information. After receiving or sending the second piece of quantity information, the first device performs repeated sending N times in the direction 2 based on the quantity information..... After receiving or sending the M^{th} piece of quantity information, the first device performs repeated sending N times in the direction M based on the quantity information. Each time the second device receives one piece of quantity information, the second device performs receiving in N receiving directions based on the quantity information. The N×M pieces of information in the second information can be transmitted based on the M pieces of quantity information that are sent in segments. In this case, it may be considered by default that a transmission process of the second information is performed in the manner shown in FIG. 6 or FIG. 8.

In still another example, the first information may not include the direction information, and may not include the quantity information. For example, the first information includes N×M pieces of time information, and each piece of time information indicates a start moment and/or duration of each element or PPDU. The first information is sent in N×M segments, and the N×M pieces of information in the second information are sent in N×M segments.

Optionally, the first information may further include change indication information, and the change indication information indicates the receive end to change the receiving direction.

For example, it is assumed that a transmission process of the second information is performed in the manner shown in FIG. 5 or FIG. 7 by default, and one piece of time information may be sent before each element or PPDU is transmitted. Optionally, before the element #1 in each group of elements is transmitted or before the PPDU #1 in each group of PPDUs is transmitted, in addition to the time information, the change indication information may be further sent. Therefore, the receive end device can change the receiving direction based on the change indication information, and receive a next group of elements or PPDUs in a changed receiving direction. Alternatively, it is assumed that a transmission process of the second information is performed in the manner shown in FIG. 6 or FIG. 8 by default, and one piece of time information may be sent before each element or each PPDU is transmitted. Optionally, before a first element #i in N elements #i is transmitted, or before a first PPDU #i in N PPDUs #i is transmitted, in addition to the time information, the change indication information may be further sent. Therefore, the receive end device can change the receiving direction based on the change indication information, and receive the N elements #i or the N PPDUs #i in a receiving direction in which N elements #i-1 or N PPDUs #i-1 are received, where i is a positive integer, and 1*≤i≤M.*

Optionally, in an implementation, each of the M elements or each of the M PPDUs includes at least one of a short training field, a channel estimation field, and a signaling field.

When the type of the second information is the type 1, the short training field is used to identify each of the M elements, the channel estimation field is used for channel estimation, and the signaling field is used to verify each of the M elements.

Specifically, a function of the short training field may be similar to that of a short training field (short training field, STF) in the 802.11 low frequency standard or the 802.11 high frequency standard. For example, one or more of the following functions may be implemented: discovering the second information, adjusting automatic gain control (automatic gain control, AGC), implementing synchronization of the second information, identifying each element in the second information, identifying a phase, or performing frequency offset estimation. A function of the channel estimation field is similar to that of a channel estimation (channel estimation, CE) field in the 802.11 low frequency standard or the 802.11 high frequency standard. For example, channel estimation may be implemented. The signaling field is used by the receive end device to verify that information, instead of noise or interference, in a direction corresponding to the element is accurately received and may be further used to provide some information required in a beamforming process. The 802.11 low frequency standard may be a standard such as 802.11ax or 802.11be, and the 802.11 high frequency standard may be a standard such as 802.11ad or 802.11ay.

Specifically, the signaling field may carry at least one of the following information: beam information, a check bit, a tail bit, count information, and third information.

The beam information includes at least one of a first identifier, a second identifier, and a third identifier. The first identifier may be understood as a sector identifier (identifier, ID), and the first identifier is used to identify a sector for sending each element. The second identifier may be understood as an antenna ID, and the second identifier is used to identify an antenna for sending each element. The third identifier may be understood as a beam ID or a beamforming ID, and the third identifier is used to identify a beam for sending each element. When the receive end feeds back an optimal receive beam or an optimal transmit beam, the optimal receive beam or the optimal transmit beam may be indicated by using the first identifier, the second identifier, or the third identifier.

The check bit is used to check the signaling field. In other words, the check bit is used by the receive end to determine whether an element is actually received, and to check information in the element. For example, the check bit may be implemented by using a cyclic redundancy check (cyclic redundancy check, CRC).

The tail bit is used to empty an encoder and a decoder in a binary convolutional coding (binary convolutional coding, BCC) mode.

The count information indicates a location of each element in the second information. For example, the count information is in a sequential form, that is, 1, 2, 3, ..., N×M-1, and N×M. For another example, the count information is in a reciprocal form, that is, N×M, N×M-1, N×M-2, ..., 2, and 1.

The third information is used to identify the second information. In other words, the third information is used by the receive end device to determine whether received information is the second information. For example, for information including a signaling field, 1 bit reserved in the signaling field may be used to carry the third information. When the bit is 1, it indicates that the information is the second information. When the bit is 0, it indicates that the information is not the second information.

In addition, the signaling field may further carry various types of information originally carried in a high frequency beacon frame, for example, various types of information in a DMG Beacon.

When the type of the second information is the type 2, the short training field is used to identify each of the M PPDUs, the channel estimation field is used for channel estimation, and the signaling field is used to verify each of the M PPDUs.

Specifically, a function of the short training field is similar to that of the STF in the low frequency standard or the 802.11 high frequency standard, and the short training field may be used to discover the second information, adjust AGC, implement synchronization of the second information, and identify each PPDU in the second information. In addition, the short training field may be further used to identify a phase, perform frequency offset estimation, and the like. A function of the channel estimation field is similar to that of the CE field in the low frequency standard or the high frequency standard, and the channel estimation field is used for channel estimation. The signaling field is used by the receive end device to verify that information, instead of noise or interference, in a direction corresponding to the PPDU is accurately received and may be further used to provide some information required in a beamforming process.

Specifically, the signaling field may carry at least one of the following information: beam information, a check bit, a tail bit, count information, and third information.

The beam information includes at least one of a first identifier, a second identifier, and a third identifier. The first identifier may be understood as a sector identifier (identifier, ID), and the first identifier is used to identify a sector for sending each PPDU. The second identifier may be understood as an antenna ID, and the second identifier is used to identify an antenna for sending each PPDU. The third identifier may be understood as a beam ID or a beamforming ID, and the third identifier is used to identify a beam for sending each PPDU. When the receive end feeds back an optimal receive beam or an optimal transmit beam, the optimal receive beam or the optimal transmit beam may be indicated by using the first identifier, the second identifier, or the third identifier.

The check bit is used to check the signaling field. In other words, the check bit is used by the receive end to determine whether a PPDU is actually received, and to check information in the PPDU. For example, the check bit may be implemented by using a CRC.

The tail bit is used to empty an encoder and a decoder in a BCC mode.

The count information indicates a location of each PPDU in the second information. For example, the count information is in a sequential form, that is, 1, 2, 3, ..., N×M-1, and N×M. For another example, the count information is in a reciprocal form, that is, N×M, N×M-1, N×M-2, ..., 2, and 1.

The third information is used to identify the second information. In other words, the third information is used by the receive end device to determine whether received information is the second information. For example, for information including a signaling field, 1 bit reserved in the signaling field may be used to carry the third information. When the bit is 1, it indicates that the information is the second information. Further, the receive end device of the second information may receive and process the second information by using the method 200. When the bit is 0, it indicates that the information is not the second information. Further, the receive end device of the information does not receive or process the information by using the method 200 in this application. For example, the receive end device of the information may receive and process the information in a general manner.

In addition, the signaling field may further carry various types of information originally carried in a high frequency beacon frame, for example, various types of information in a DMG Beacon.

For example, a difference between the type 2 and the type 1 lies in that the type 1 includes N×M elements, and in the type 2, each element in the type 1 is used as one PPDU, that is, the type 2 includes N×M PPDUs. Therefore, when the type of the second information is the type 1, the second information may be understood as one PPDU. The PPDU herein is denoted as a first PPDU, that is, the first PPDU includes N×M elements. When the type of the second information is the type 2, the second information may be understood as N×M PPDUs.

For example, the short training field may be in a form similar to a Golay complementary sequence in protocols such as 802.11ad and 802.11ay, or in a form of orthogonal frequency division multiplexing (orthogonal frequency division multiplexing, OFDM) subcarrier modulation in protocols such as 802.11ax and 802.11be, provided that synchronization can be achieved. Similarly, the channel estimation field may be in a form of a Golay complementary sequence, or may be in a form of OFDM subcarrier modulation, provided that channel estimation can be performed. The signaling field may be in a form of a single carrier, or may be in a form of OFDM subcarrier modulation. Specific forms of the short training field, the channel estimation field, and the signaling field are not limited in this application.

It should be understood that each element or each PPDU may further carry a field other than the short training field, the channel estimation field, and the signaling field, for example, a data (Data) field, an AGC field, or a training field. This is not limited in this application.

In an implementation, the short training field, the channel estimation field, and the signaling field that are included in the element or the PPDU in this application are the same as those in 802.11ad and 802.11ay, the second information is identified by using a reserved field in the signaling field, and the receive end device of the second information is enabled to identify whether the received information is the second information. For example, when the reserved field is set to a default value (for example, 0), it indicates that the information is not the second information. When the reserved field is set to 1, it indicates that the information is the second information in this application.

In an implementation, the short training field, the channel estimation field, and the signaling field included in the element or the PPDU in this application are different from those in 802.11ad and 802.11ay. In other words, a short training field, a channel estimation field, and a signaling field that are newly designed are used.

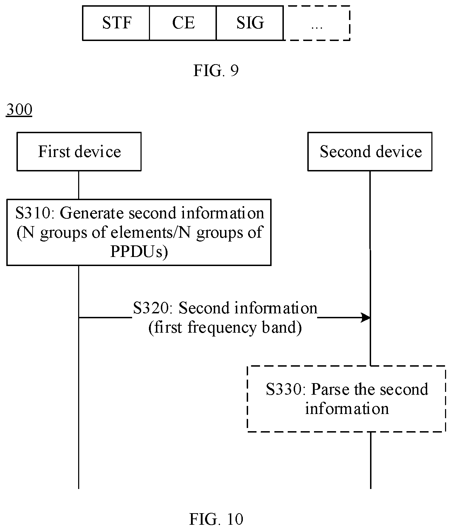

FIG. 9 is a diagram of a format of an element according to an embodiment of this application. FIG. 9 may alternatively be considered as a diagram of a format of a PPDU according to an embodiment of this application.

As shown in FIG. 9, each element or PPDU includes an STF field, a CE field, and a SIG field. The STF field is used to identify the element or the PPDU shown in FIG. 9, the CE field is used for channel estimation, and the SIG field is used to verify the element or the PPDU shown in FIG. 9. The SIG field may carry beam information, a check bit, a tail bit, count information, third information, and the like.

It should be understood that FIG. 9 is merely an example. All or some of the fields shown in FIG. 9 may exist, or may be combined, added, or deleted in another order. This is not limited in this application.

It should be further understood that the short training field, the channel estimation field, and the signaling field in this application are mainly used to implement synchronization, channel estimation, and check identification. Specific names of these fields are not limited in this application, provided that corresponding functions can be implemented.

According to the solution provided in the foregoing embodiments, in this application, functions such as information synchronization, channel estimation, and check can be implemented by using the short training field, the channel estimation field, and the signaling field. This helps improve information transmission reliability.

Optionally, in an implementation, the second information includes information about an optimal receive beam or an optimal transmit beam.

For example, an AP sends information #A (an example of second information) to a STA according to the method 200, and the STA receives the information #A according to the method 200. The STA obtains an optimal transmit beam of the AP and an optimal receive beam of the STA based on sending and receiving of the information #A. Further, the STA may send information #B (another example of the second information) to the AP, where the information #B includes the optimal transmit beam of the AP and the optimal receive beam of the STA that are obtained by the STA. In addition, the AP may further obtain an optimal transmit beam of the STA and an optimal receive beam of the AP based on sending and receiving of the information #B.

Optionally, in an implementation, the first information is carried in a first frame, the first frame is for beam training in the first frequency band, and the first frame is a beacon frame, a request frame, a response frame, an announcement frame, or a trigger frame.

Specifically, the first frame may be a beacon frame dedicated to information exchange between high and low frequencies, or a high-frequency request frame, a high-frequency response frame, or the like that is sent at a low frequency for high-frequency communication. Alternatively, the first frame may be an announcement frame, a trigger frame, or the like related to high-frequency beam training.

FIG. 10 is a schematic flowchart of a communication method 300 according to an embodiment of this application.

S310: A first device generates second information, where the second information is for beam training in a first frequency band, the second information includes N groups of elements, each of the N groups of elements is the same, and each of the N groups of elements includes M elements; or the second information includes N groups of PPDUs, each of the N groups of PPDUs is the same, and each of the N groups of PPDUs includes M PPDUs. N and M are positive integers.

It should be understood that the M elements are M different elements, and the M PPDUs are M different PPDUs.

Specifically, for specific descriptions of the second information, refer to the foregoing method 300. Details are not described herein again.

S320: The first device sends the second information in the first frequency band, and correspondingly, a second device receives the second information in the first frequency band.

Specifically, that the first device sends the second information in the first frequency band includes: The first device sends the M elements in M different directions respectively, sends one of the M elements in each direction, and sends each of the M elements N times; or the first device sends the M PPDUs in M different directions respectively, sends one of the M PPDUs in each direction, and sends each of the M PPDUs N times.

Specifically, that a second device receives the second information in the first frequency band includes: The second device receives the M elements or the M PPDUs in a same receiving direction, and the second device receives the second information in N directions.

For a process of sending the second information and a detailed process of receiving the second information, refer to the foregoing method 200. Details are not described herein again.

According to the solution provided in the foregoing embodiment, because the second information includes the N groups of elements/PPDUs, and each of the N groups includes the M different elements/PPDUs, a transmit end device of the second information can train a transmit beam M times based on the M different elements/PPDUs, and a receive end device of the second information can train a receive beam N times based on N same elements/PPDUs repeatedly sent in each direction. In other words, the transmit end and the receive end can perform beam training in a bidirectional mode. This helps extend a communication reachable range.

Optionally, the method 300 further includes S330: The second device parses the second information.

For example, the second device obtains an optimal transmit beam of the first device and an optimal receive beam of the second device based on sending and receiving of the second information.

Optionally, the method 300 further includes: The first device obtains first information, and the first device sends the first information to the second device in the second frequency band.

The first information includes direction information and/or quantity information, the direction information indicates M directions for sending the second information, and the quantity information indicates a quantity N of repeated transmissions in each of the M directions.

Optionally, the first information further includes type information, and the type information indicates a type of the second information.

Optionally, the first information may further include time information, and the time information indicates a start moment and/or duration of the second information.

Specifically, for specific descriptions of the first information, refer to the foregoing method 3200. Details are not described herein again.

A highest frequency in the second frequency band does not exceed a lowest frequency in the first frequency band.

Specifically, for specific descriptions of the second frequency band and the first frequency band, refer to the foregoing method 3200. Details are not described herein again.

That the first device obtains first information includes: The first device generates the first information, or the first device receives the first information from another device.

For example, the first device is a STA 1, the second device is a STA 2, and the another device is an AP. The AP may send first information to the STA 1, to indicate M directions for sending the second information and a quantity N of repeated transmissions in each of the M directions; and the STA 1 may send the first information to the STA 2. Further, the STA 1 sends the second information based on the first information, and the STA 2 receives the second information based on the first information. In this way, beam training is completed in a bidirectional mode.

Optionally, in an implementation, each of the M elements or each of the M PPDUs includes at least one of a short training field, a channel estimation field, and a signaling field.

Specifically, for specific descriptions of the short training field, the channel estimation field, and the signaling field, and other content that may be included in each of the M elements or each of the M PPDUs, refer to the foregoing method 200. Details are not described herein again.

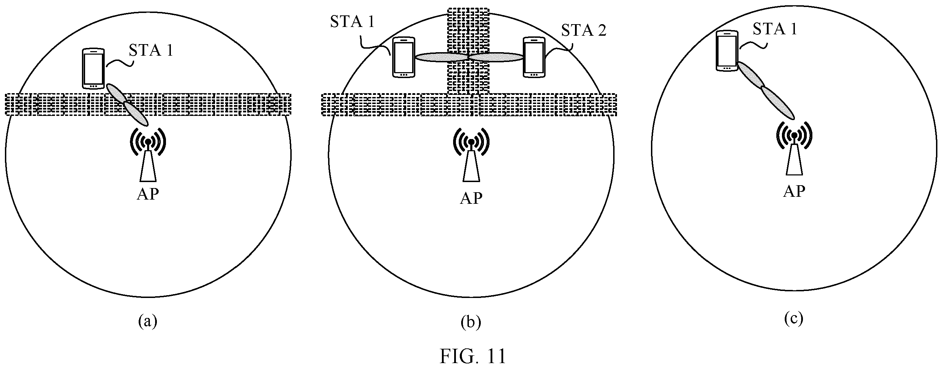

FIG. 11 is a diagram of three application scenarios according to an embodiment of this application. As shown in (a) in FIG. 11, because a communication obstacle exists between a STA 1 and an AP, signal attenuation is large, and communication is unreachable in a beam training manner in which one end is quasi-omnidirectional and the other end is directional. As shown in (c) in FIG. 11, a communication distance between the STA 1 and the AP is long, communication is unreachable in a beam training manner in which one end is quasi-omnidirectional and the other end is directional. The STA 1 and the AP can perform beam training in a high-frequency bidirectional mode according to the method 200 in this application. Because a communication range in the bidirectional mode is larger than a communication range in which one end is quasi-omnidirectional and the other end is directional, a reachable range for communication between the two devices can be extended. In this way, the two devices can communicate with each other at a high frequency. As shown in (b) in FIG. 11, a communication obstacle exists between the STA 1 and the STA 2, and signal attenuation is large. In a beam training manner in which one end is quasi-omnidirectional and the other end is directional, communication between the STA 1 and the STA 2 is unreachable. In high-frequency communication with the STA 1 and the STA 2, the AP can indicate the STA 1 and the STA 2 to enable the bidirectional mode. Therefore, according to the method 200 in this application, the STA 1 and the STA 2 can perform beam training in a high-frequency bidirectional mode, to extend a communication reachable range.

It can be learned from the example shown in (b) in FIG. 11 that, although this specification describes a manner of notifying a high frequency of an initial establishment configuration by using a low frequency to enable the high-frequency bidirectional beam training manner, this application is not limited thereto, and the foregoing information may alternatively be notified by using the high frequency.

The foregoing describes the method embodiments in embodiments of this application, and the following describes corresponding apparatus embodiments. It should be understood that descriptions of the apparatus embodiments correspond to the descriptions of the method embodiments. Therefore, for a part that is not described in detail, refer to the foregoing method embodiments.

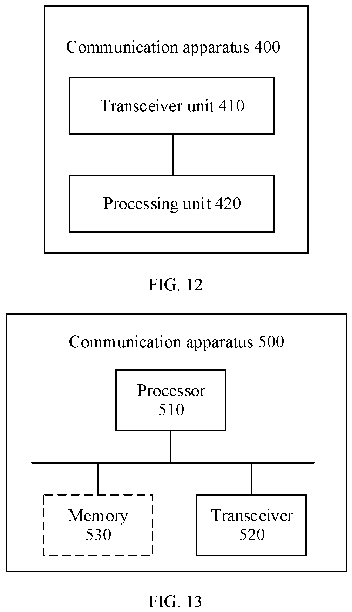

FIG. 12 is a diagram of a communication apparatus according to an embodiment of this application. As shown in FIG. 12, an apparatus 400 may include a transceiver unit 410 and/or a processing unit 420. The transceiver unit 410 may communicate with the outside, and the processing unit 420 is configured to process data/information. The transceiver unit 410 may also be referred to as a communication interface or a communication unit.

In a possible design, the apparatus 400 may be the first device in the foregoing method 200, or may be a chip configured to implement functions of the first device in the foregoing method 200. The apparatus 400 may implement procedures performed by the first device in the foregoing method 200. The processing unit 420 is configured to perform processing-related operations of the first device in the foregoing method 200, and the transceiver unit 410 is configured to perform sending/receiving-related operations of the first device in the foregoing method 200.

For example, the processing unit 420 is configured to generate first information, where the first information includes direction information and/or quantity information, the direction information indicates M directions for sending second information, the quantity information indicates a quantity N of repeated transmissions in each of the M directions, the second information is for beam training in a first frequency band, and N and M are positive integers; and the transceiver unit 410 is configured to send the first information in a second frequency band, where a highest frequency in the second frequency band does not exceed a lowest frequency in the first frequency band.

Optionally, the second information includes N groups of elements, each of the N groups of elements is the same, and each of the N groups of elements includes M elements; or the second information includes N groups of PPDUs, each of the N groups of PPDUs is the same, and each of the N groups of PPDUs includes M PPDUs.

Optionally, each of the M elements or each of the M PPDUs indicates one of the M directions.

Optionally, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

Optionally, the signaling field includes at least one of the following: beam information, where the beam information includes at least one of a first identifier, a second identifier, a third identifier, and a fourth identifier, the first identifier is used to identify a sector for sending each element or each PPDU, the second identifier is used to identify an antenna for sending each element or each PPDU, the third identifier is used to identify a beam for sending each element or each PPDU, and the fourth identifier is used to identify beamforming for sending each element or each PPDU; a check bit, where the check bit is used to check the signaling field; count information, where the count information indicates a location of each element or each PPDU in the second information; and third information, where the third information is used to identify the second information.

Optionally, the transceiver unit 410 is further configured to: send or receive the second information in the first frequency band.

Optionally, the transceiver unit 410 is specifically configured to: send the M elements in the M directions respectively, where each of the M elements is sent N times; or send the M PPDUs in the M directions respectively, where each of the M PPDUs is sent N times.

Optionally, the corresponding same elements in the N groups of elements are sent in a same sending direction.

Optionally, the transceiver unit 410 is specifically configured to: receive the M elements or the M PPDUs in a same receiving direction, and receive the second information in N directions.

Optionally, the corresponding same elements in the N groups of elements are received in different receiving directions.

Optionally, the first information includes time information, and the time information indicates a start moment and/or duration for sending the second information.

Optionally, the first information is carried in a first frame, the first frame is for beam training in the first frequency band, and the first frame is a beacon frame, a request frame, a response frame, an announcement frame, or a trigger frame.

For example, the transceiver unit 410 may be divided into a receiving unit and a sending unit. The receiving unit is configured to perform receiving-related operations of the first device in the foregoing method 200, and the sending unit is configured to perform sending-related operations of the first device in the foregoing method 200.

It should be understood that the foregoing content is merely used an example for understanding. The apparatus 400 can further implement other steps, actions, or methods related to the first device in the method 200. Details are not described herein.

In another possible design, the apparatus 400 may be the second device in the foregoing method 200, or may be a chip configured to implement functions of the second device in the foregoing method 200. The apparatus 400 may implement procedures performed by the second device in the foregoing method 200. The transceiver unit 410 is configured to perform sending/receiving-related operations of the second device in the foregoing method 200.

Optionally, in this design, the apparatus 400 may further include the processing unit 420. The processing unit 420 may be configured to perform processing-related operations of the second device in the foregoing method 200.

For example, the transceiver unit 410 is configured to receive first information in a second frequency band, where the first information includes direction information and/or quantity information, the direction information indicates M directions for sending second information, the quantity information indicates a quantity N of repeated transmissions in each of the M directions, the second information is for beam training in a first frequency band, and N and M are positive integers; and the transceiver unit 410 is further configured to: send or receive the second information in the first frequency band, where a highest frequency in the second frequency band does not exceed a lowest frequency in the first frequency band.

Optionally, the second information includes N groups of elements, each of the N groups of elements is the same, and each of the N groups of elements includes M elements; or the second information includes N groups of PPDUs, each of the N groups of PPDUs is the same, and each of the N groups of PPDUs includes M PPDUs.

Optionally, each of the M elements or each of the M PPDUs indicates one of the M directions.

Optionally, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

Optionally, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

Optionally, the transceiver unit 410 is specifically configured to: receive the M elements or the M PPDUs in a same receiving direction, and receive the second information in N directions.

Optionally, the transceiver unit 410 is specifically configured to: send the M elements in the M directions respectively, where each of the M elements is sent N times; or send the M PPDUs in the M directions respectively, where each of the M PPDUs is sent N times.

Optionally, the corresponding same elements in the N groups of elements are sent in a same sending direction.

Optionally, the first information includes time information, and the time information indicates a start moment and/or duration for sending the second information.

Optionally, the first information is carried in a first frame, the first frame is for beam training in the first frequency band, and the first frame is a beacon frame, a request frame, a response frame, an announcement frame, or a trigger frame.

For example, the transceiver unit 410 may be divided into a receiving unit and a sending unit. The receiving unit is configured to perform receiving-related operations of the second device in the foregoing method 200, and the sending unit is configured to perform sending-related operations of the second device in the foregoing method 200.

It should be understood that the foregoing content is merely used an example for understanding. The apparatus 400 can further implement other steps, actions, or methods related to the second device in the foregoing method 200. Details are not described herein.

In still another possible design, the apparatus 400 may be the first device in the foregoing method 300, or may be a chip configured to implement functions of the first device in the foregoing method 300. The apparatus 400 may implement procedures performed by the first device in the foregoing method 300. The processing unit 420 is configured to perform processing-related operations of the first device in the foregoing method 300, and the transceiver unit 410 is configured to perform sending/receiving-related operations of the first device in the foregoing method 300.

For example, the processing unit 420 is configured to generate second information, where the second information is for beam training in a first frequency band, the second information includes N groups of elements, each of the N groups of elements is the same, and each of the N groups of elements includes M elements; or the second information includes N groups of PPDUs, each of the N groups of PPDUs is the same, each of the N groups of PPDUs includes M PPDUs, and N and M are positive integers; and the transceiver unit 410 is configured to send the second information in the first frequency band.

Optionally, the processing unit 420 is further configured to obtain first information, where the first information includes direction information and/or quantity information, the direction information indicates M directions for sending the second information, and the quantity information indicates a quantity N of repeated transmissions in each of the M directions; and the transceiver unit 410 is further configured to send the first information in a second frequency band, where a highest frequency in the second frequency band does not exceed a lowest frequency in the first frequency band.

Optionally, the transceiver unit 410 is specifically configured to send the second information in the first frequency band based on the first information.

Optionally, the transceiver unit 410 is specifically configured to: send the M elements in the M directions respectively, where each of the M elements is sent N times; or send the M PPDUs in the M directions respectively, where each of the M PPDUs is sent N times.

Optionally, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

Optionally, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

Optionally, the first information includes time information, and the time information indicates a start moment and/or duration for sending the second information.

Optionally, the first information is carried in a first frame, the first frame is for beam training in the first frequency band, and the first frame is a beacon frame, a request frame, a response frame, an announcement frame, or a trigger frame.

For example, the transceiver unit 410 may be divided into a receiving unit and a sending unit. The receiving unit is configured to perform receiving-related operations of the first device in the foregoing method 300, and the sending unit is configured to perform sending-related operations of the first device in the foregoing method 300.

It should be understood that the foregoing content is merely used an example for understanding. The apparatus 400 can further implement other steps, actions, or methods related to the first device in the method 300. Details are not described herein.

In still another possible design, the apparatus 400 may be the second device in the foregoing method 300, or may be a chip configured to implement functions of the second device in the foregoing method 300. The apparatus 400 may implement procedures performed by the second device in the foregoing method 300. The transceiver unit 410 is configured to perform sending/receiving-related operations of the second device in the foregoing method 300, and the processing unit 420 is configured to perform processing-related operations of the second device in the foregoing method 300.

For example, the transceiver unit 410 is configured to receive second information in a first frequency band, where the second information is for beam training in the first frequency band, the second information includes N groups of elements, each of the N groups of elements is the same, and each of the N groups of elements includes M elements; or the second information includes N groups of PPDUs, each of the N groups of PPDUs is the same, each of the N groups of PPDUs includes M PPDUs, and N and M are positive integers; and the processing unit 420 is configured to parse the second information.

Optionally, the processing unit 420 is further configured to receive first information in a second frequency band, where the first information includes direction information and/or quantity information, the direction information indicates M directions for sending the second information, the quantity information indicates a quantity N of repeated transmissions in each of the M directions, and a highest frequency in the second frequency band does not exceed a lowest frequency in the first frequency band.

Optionally, the transceiver unit 410 is specifically configured to receive the second information in the first frequency band based on the first information.

Optionally, the transceiver unit 410 is specifically configured to: receive the M elements or the M PPDUs in a same receiving direction, and receive the second information in N directions.

Optionally, each of the M elements includes at least one of a short training field, a channel estimation field, and a signaling field, the short training field is used to identify each of the M elements, the channel estimation field is used for channel estimation, and the signaling field is used to verify each of the M elements; or each of the M PPDUs includes at least one of a short training field, a channel estimation field, and a signaling field, the short training field is used to identify each of the M PPDUs, the channel estimation field is used for channel estimation, and the signaling field is used to verify each of the M PPDUs.

Optionally, the signaling field includes at least one of the following: beam information, where the beam information includes at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU; a check bit, where the check bit is used to check the signaling field; count information, where the count information indicates a location of each element or each PPDU in the second information; and third information, where the third information is used to identify the second information.

Optionally, the first information includes time information, and the time information indicates a start moment and/or duration for sending the second information.

Optionally, the first information is carried in a first frame, the first frame is for beam training in the first frequency band, and the first frame is a beacon frame, a request frame, a response frame, an announcement frame, or a trigger frame.

For example, the transceiver unit 410 may be divided into a receiving unit and a sending unit. The receiving unit is configured to perform receiving-related operations of the second device in the foregoing method 300, and the sending unit is configured to perform sending-related operations of the second device in the foregoing method 300.

It should be understood that the foregoing content is merely used an example for understanding. The apparatus 400 can further implement other steps, actions, or methods related to the second device in the foregoing method 300. Details are not described herein.

It should be understood that the apparatus 400 herein is embodied in a form of a functional unit. The term "unit" herein may refer to an application-specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 400 has functions of implementing corresponding steps performed by the first device in the foregoing methods, or the apparatus 400 has functions of implementing corresponding steps performed by the second device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform sending and receiving operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 12 may be the second device or the first device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 is another diagram of a structure of a communication apparatus according to an embodiment of this application. As shown in FIG. 13, a communication apparatus 500 includes at least one processor 510 and a transceiver 520. The processor 510 is coupled to a memory, and is configured to execute instructions stored in the memory, to control the transceiver 520 to send a signal and/or receive a signal. Optionally, the communication apparatus 500 further includes a memory 530, configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 1020 may be a communication interface or an interface circuit.

When the communication apparatus 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

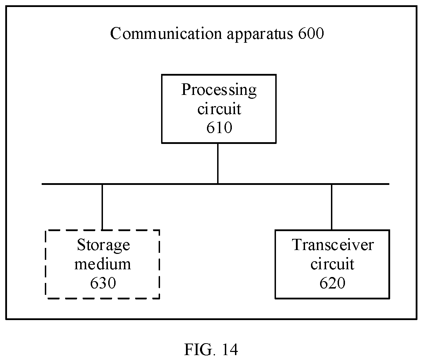

FIG. 14 is still another diagram of a structure of a communication apparatus according to an embodiment of this application. As shown in FIG. 14, an apparatus 600 includes a processing circuit 610 and a transceiver circuit 620. The processing circuit 610 and the transceiver circuit 620 communicate with each other through an internal connection path. The processing circuit 610 is configured to execute instructions to control the transceiver circuit 620 to send a signal and/or receive a signal.

Optionally, the apparatus 600 may further include a storage medium 630. The storage medium 630 communicates with the processing circuit 610 and the transceiver circuit 620 through an internal connection path. The storage medium 630 is configured to store instructions, and the processing circuit 610 may execute the instructions stored in the storage medium 630.

In a possible implementation, the apparatus 600 is configured to implement procedures corresponding to the first device in the foregoing method embodiments.

In another possible implementation, the apparatus 600 is configured to implement procedures corresponding to the second device in the foregoing method embodiments.

According to the methods provided in embodiments of this application, this application further provides a computer program product, and the computer program product includes computer program code. When the computer program code is run on a computer, the computer is enabled to perform the method in the embodiment shown in FIG. 3.

According to the method provided in embodiments of this application, this application further provides a computer-readable medium. The computer-readable medium stores program code, and when the program code is run on a computer, the computer is enabled to perform the method in the foregoing method embodiments.

According to the method provided in embodiments of this application, this application further provides a system, including the foregoing first device and/or the second device.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first device, first information, wherein the first information comprises direction information and/or quantity information, the direction information indicates M directions for sending second information, the quantity information indicates a quantity N of repeated transmissions in each of the M directions, the second information is for beam training in a first frequency band, and N and M are positive integers; and
sending, by the first device, the first information in a second frequency band, wherein a highest frequency in the second frequency band does not exceed a lowest frequency in the first frequency band.

2. The method according to claim 1, wherein the second information comprises N groups of elements, each of the N groups of elements is the same, and each of the N groups of elements comprises M elements; or
the second information comprises N groups of physical layer protocol data units PPDUs, each of the N groups of PPDUs is the same, and each of the N groups of PPDUs comprises M PPDUs.

3. The method according to claim 2, wherein each of the M elements comprises at least one of a short training field, a channel estimation field, and a signaling field, the short training field is used to identify each of the M elements, the channel estimation field is used for channel estimation, and the signaling field is used to verify each of the M elements; or
each of the M PPDUs comprises at least one of a short training field, a channel estimation field, and a signaling field, the short training field is used to identify each of the M PPDUs, the channel estimation field is used for channel estimation, and the signaling field is used to verify each of the M PPDUs.

4. The method according to claim 3, wherein the signaling field comprises at least one of the following:
beam information, wherein the beam information comprises at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU;
a check bit, wherein the check bit is used to check the signaling field;
count information, wherein the count information indicates a location of each element or each PPDU in the second information; and
third information, wherein the third information is used to identify the second information.

5. The method according to any one of claims 2 to 4, wherein the method further comprises:
sending or receiving, by the first device, the second information in the first frequency band.

6. The method according to claim 5, wherein the sending, by the first device, the second information comprises:
sending, by the first device, the M elements in the M directions respectively, wherein each of the M elements is sent N times; or
sending, by the first device, the M PPDUs in the M directions respectively, wherein each of the M PPDUs is sent N times.

7. The method according to claim 5, wherein the receiving, by the first device, the second information comprises:
receiving, by the first device, the M elements or the M PPDUs in a same receiving direction, and receiving, by the first device, the second information in N directions.

8. The method according to any one of claims 1 to 7, wherein the first information comprises time information, and the time information indicates a start moment and/or duration for sending the second information.

9. A communication method, comprising:
receiving, by a second device, first information in a second frequency band, wherein the first information comprises direction information and/or quantity information, the direction information indicates M directions for sending second information, the quantity information indicates a quantity N of repeated transmissions in each of the M directions, the second information is for beam training in a first frequency band, and N and M are positive integers; and
sending or receiving, by the second device, the second information in the first frequency band, wherein a highest frequency in the second frequency band does not exceed a lowest frequency in the first frequency band.

10. The method according to claim 9, wherein the second information comprises N groups of elements, each of the N groups of elements is the same, and each of the N groups of elements comprises M elements; or
the second information comprises N groups of physical layer protocol data units PPDUs, each of the N groups of PPDUs is the same, and each of the N groups of PPDUs comprises M PPDUs.

11. The method according to claim 10, wherein each of the M elements comprises at least one of a short training field, a channel estimation field, and a signaling field, the short training field is used to identify each of the M elements, the channel estimation field is used for channel estimation, and the signaling field is used to verify each of the M elements; or
each of the M PPDUs comprises at least one of a short training field, a channel estimation field, and a signaling field, the short training field is used to identify each of the M PPDUs, the channel estimation field is used for channel estimation, and the signaling field is used to verify each of the M PPDUs.

12. The method according to claim 11, wherein the signaling field comprises at least one of the following:
beam information, wherein the beam information comprises at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU;
a check bit, wherein the check bit is used to check the signaling field;
count information, wherein the count information indicates a location of each element or each PPDU in the second information; and
third information, wherein the third information is used to identify the second information.

13. The method according to any one of claims 10 to 12, wherein the receiving, by the second device, the second information comprises:
receiving, by the second device, the M elements or the M PPDUs in a same receiving direction, and receiving, by the second device, the second information in N directions.

14. The method according to any one of claims 10 to 12, wherein the sending, by the second device, the second information comprises:
sending, by the second device, the M elements in the M directions respectively, wherein each of the M elements is sent N times; or
sending, by the second device, the M PPDUs in the M directions respectively, wherein each of the M PPDUs is sent N times.

15. The method according to any one of claims 9 to 14, wherein the first information comprises time information, and the time information indicates a start moment and/or duration for sending the second information.

16. A communication apparatus, comprising:
a processing unit, configured to generate first information, wherein the first information comprises direction information and/or quantity information, the direction information indicates M directions for sending second information, the quantity information indicates a quantity N of repeated transmissions in each of the M directions, the second information is for beam training in a first frequency band, and N and M are positive integers; and
a transceiver unit, configured to send the first information in a second frequency band, wherein a highest frequency in the second frequency band does not exceed a lowest frequency in the first frequency band.

17. The apparatus according to claim 16, wherein the second information comprises N groups of elements, each of the N groups of elements is the same, and each of the N groups of elements comprises M elements; or
the second information comprises N groups of physical layer protocol data units PPDUs, each of the N groups of PPDUs is the same, and each of the N groups of PPDUs comprises M PPDUs.

18. The apparatus according to claim 17, wherein each of the M elements comprises at least one of a short training field, a channel estimation field, and a signaling field, the short training field is used to identify each of the M elements, the channel estimation field is used for channel estimation, and the signaling field is used to verify each of the M elements; or
each of the M PPDUs comprises at least one of a short training field, a channel estimation field, and a signaling field, the short training field is used to identify each of the M PPDUs, the channel estimation field is used for channel estimation, and the signaling field is used to verify each of the M PPDUs.

19. The apparatus according to claim 18, wherein the signaling field comprises at least one of the following:
beam information, wherein the beam information comprises at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU;
a check bit, wherein the check bit is used to check the signaling field;
count information, wherein the count information indicates a location of each element or each PPDU in the second information; and
third information, wherein the third information is used to identify the second information.

20. The apparatus according to any one of claims 17 to 19, wherein the transceiver unit is further configured to:
send or receive the second information in the first frequency band.

21. The apparatus according to claim 20, wherein the transceiver unit is specifically configured to:
send the M elements in the M directions respectively, wherein each of the M elements is sent N times; or
send the M PPDUs in the M directions respectively, wherein each of the M PPDUs is sent N times.

22. The apparatus according to claim 20, wherein the transceiver unit is specifically configured to:
receive the M elements or the M PPDUs in a same receiving direction, and receive, by the first device, the second information in N directions.

23. The apparatus according to any one of claims 16 to 22, wherein the first information comprises time information, and the time information indicates a start moment and/or duration for sending the second information.

24. A communication apparatus, comprising:
a transceiver unit, configured to receive first information in a second frequency band, wherein the first information comprises direction information and/or quantity information, the direction information indicates M directions for sending second information, the quantity information indicates a quantity N of repeated transmissions in each of the M directions, the second information is for beam training in a first frequency band, and N and M are positive integers, wherein
the transceiver unit is further configured to send or receive the second information in the first frequency band, wherein a highest frequency in the second frequency band does not exceed a lowest frequency in the first frequency band.

25. The apparatus according to claim 24, wherein the second information comprises N groups of elements, each of the N groups of elements is the same, and each of the N groups of elements comprises M elements; or
the second information comprises N groups of physical layer protocol data units PPDUs, each of the N groups of PPDUs is the same, and each of the N groups of PPDUs comprises M PPDUs.

26. The apparatus according to claim 25, wherein each of the M elements comprises at least one of a short training field, a channel estimation field, and a signaling field, the short training field is used to identify each of the M elements, the channel estimation field is used for channel estimation, and the signaling field is used to verify each of the M elements; or
each of the M PPDUs comprises at least one of a short training field, a channel estimation field, and a signaling field, the short training field is used to identify each of the M PPDUs, the channel estimation field is used for channel estimation, and the signaling field is used to verify each of the M PPDUs.

27. The apparatus according to claim 26, wherein the signaling field comprises at least one of the following:
beam information, wherein the beam information comprises at least one of a first identifier, a second identifier, and a third identifier, the first identifier is used to identify a sector for sending each element or each PPDU, the second identifier is used to identify an antenna for sending each element or each PPDU, and the third identifier is used to identify a beam for sending each element or each PPDU;
a check bit, wherein the check bit is used to check the signaling field;
count information, wherein the count information indicates a location of each element or each PPDU in the second information; and
third information, wherein the third information is used to identify the second information.

28. The apparatus according to any one of claims 25 to 27, wherein the transceiver unit is specifically configured to:
receive, by the second device, the M elements or the M PPDUs in a same receiving direction, and receive, by the second device, the second information in N directions.

29. The apparatus according to any one of claims 25 to 27, wherein the transceiver unit is specifically configured to:
send, by the second device, the M elements in the M directions respectively, wherein each of the M elements is sent N times; or
send, by the second device, the M PPDUs in the M directions respectively, wherein each of the M PPDUs is sent N times.

30. The apparatus according to any one of claims 24 to 29, wherein the first information comprises time information, and the time information indicates a start moment and/or duration for sending the second information.

31. A communication apparatus, comprising:
a memory, configured to store computer instructions; and
a processor, configured to execute the computer instructions stored in the memory, to enable the communication apparatus to perform the method according to any one of claims 1 to 8, or perform the method according to any one of claims 9 to 15.

32. A chip, comprising a processor and an interface, and configured to: invoke a computer program from a memory and run the computer program stored in the memory, to perform the method according to any one of claims 1 to 8, or perform the method according to any one of claims 9 to 15.

33. A computer-readable storage medium, configured to store a computer program, wherein the computer program comprises instructions for implementing the method according to any one of claims 1 to 8, or comprises instructions for implementing the method according to any one of claims 9 to 15.

34. A computer program product, comprising computer program code, wherein when the computer program code is run on a computer, the computer is enabled to implement the method according to any one of claims 1 to 8 or implement the method according to any one of claims 9 to 15.
